# EUROPÄISCHE PATENTSCHRIFT

(11) **EP 0 867 005 B1**
(45) Veröffentlichungstag und Bekanntmachung des Hinweises auf die Patenterteilung: **28.01.2004**
(21) Anmeldenummer: 96945735.7
(22) Anmeldetag: 18.11.1996
(51) Int. Cl.: G06F 13/40, G06F 13/28

(54) **RECHNER**
COMPUTER
ORDINATEUR

(30) Priorität: 13.12.1995 DE 29519804 U
(43) Veröffentlichungstag der Anmeldung: 30.09.1998
(73) Patentinhaber: SIEMENS AKTIENGESELLSCHAFT, 80333 München (DE)
(72) Erfinder: MÜLLER, Thomas, D-76744 Wörth (DE)
(86) Internationale Anmeldenummer: PCT/DE1996/002197
(87) Internationale Veröffentlichungsnummer: WO 1997/022043

(56) Entgegenhaltungen:
- EP-A- 0 351 961
- WO-A-93/02420
- US-A- 4 286 319

## Beschreibung

Die Erfindung betrifft einen Rechner mit Steckplätzen, die untereinander mit Adreß-, Daten- und Steuerleitungen verbunden sind, wobei die Steuerleitungen DMA-Anforderungsleitungen umfassen, und mit einem DMA-Controller, dem über die DMA-Anforderungsleitungen und über Einstellmittel DMA-Anforderungssignale durch steckbare Funktionseinheiten zuführbar sind.

Ein derartiger Rechner ist aus dem Siemens-Katalog IC 10, SICOMP Industrie-Computer, Ausgabe 3/95 bekannt. Dort sind einem DMA-Controller eines sogenannten Motherboards über DMA-Anforderungsleitungen DMA-Anforderungssignale zuführbar, welche steckbare Funktionseinheiten, z. B. in Form von Datenübertragungsbaugruppen, erzeugen. Um zu gewährleisten, daß die Funktionseinheiten ihre DMA-Anforderungssignale dem DMA-Controller über verschiedene DMA-Anforderungsleitungen (DMA-Kanäle) zuführen können, sind auf diesen Funktionseinheiten Einstellmittel in Form von Codierschaltern vorgesehen. Wird versehentlich auf zwei Funktionseinheiten dieselbe DMA-Anforderungsleitung zur Übertragung ihrer DMA-Anforderungssignale ausgewählt, kommt es zu Betriebsstörungen im Rechner, da der DMA-Controller nicht erkennen kann, welche Funktionseinheit das DMA-Anforderungssignal übertragen hat.

Aus der EP 0 351 961 A2 ist ein Rechner mit Einstellmitteln bekannt, welche zum Ändern der Steckerbelegung eines Steckplatzes vorgesehen sind, wobei die Steckerbelegung beim Einstecken einer Funktionseinheit bestimmt wird.

WO 93/02420 offenbart ein Erweiterungssystem, welches über eine in einen Steckplatz einer Work Station steckbare Erweiterungsbaugruppe mit einem S-Bus der Work Station verbindbar ist.

US 4,286,319 beschreibt einen Rechner mit angeschlossenen Kopplungseinheiten zum Verbinden mit einem weiteren Rechner.

Der vorliegenden Erfindung liegt die Aufgabe zugrunde, in einem Rechner der eingangs genannten Art die Auswahl der DMA-Anforderungsleitungen zu vereinfachen.

Diese Aufgabe wird durch die im kennzeichnenden Teil des Anspruchs 1 angegebenen Maßnahmen gelöst.

Vorteilhafte Ausgestaltungen der Erfindung ergeben sich aus den Unteransprüchen.

Die Erfindung geht von der Idee aus, daß n einstellbare DMA-Kanäle der Steckkarten mit allen DMA-Kanälen eines Systembusses nach Art einer Kreuzschienenverteilung verbindbar sind. Ein nicht verbundener DMA-Kanal ist hochohmig geschaltet, wozu ein Pull-Down-Widerstand am DMA-Controller einen definierten Pegel erzeugt.

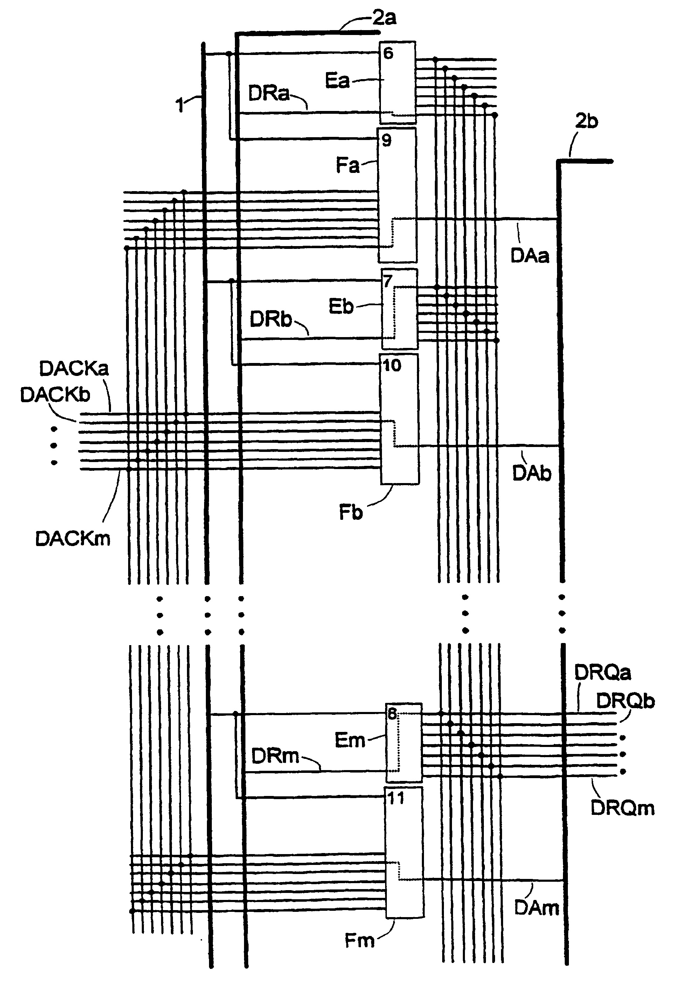

Die Erfindung wird nachfolgend anhand eines Ausführungsbeispiels unter Bezugnahme auf die einzige Figur der Zeichnung näher erläutert. Die Figur der Zeichnung zeigt Bestandteile einer Busbeschaltung.

Ein Systembus eines Rechners verbindet mit jeweils einer Funktionseinheit bestückte und mit einem Einstellmittel versehene Steckplätze und umfaßt Steuerleitungen 1, DMA-Anforderungs- und Quittungsleitungen 2a, 2b sowie hier nicht dargestellte Adreß- und Datenleitungen. Im vorliegenden Beispiel sind m DMA-Anforderungsleitungen DRa, DRb ... DRm für m Steckplätze vorgesehen, wobei die DMA-Anforderungsleitung DRa an den DMA-Eingang eines ersten Einstellmittels Ea, die DMA-Anforderungsleitung DRb an den DMA-Eingang eines zweiten Einstellmittels Eb und die DMA-Anforderungsleitung DRm an den DMA-Eingang eines m-ten Einstellmittels Em angeschlossen ist. Die Ausgangsleitungen DRQa, DRQb ... DRQm der Einstellmittel Ea, Eb ... Em, z. B. Einstellmittel in Form von Multiplexern, sind jeweils nach Art einer Kreuzschienenverteilung miteinander verbunden und an einen DMA-Controller eines sogenannten Motherboards (nicht dargestellt) geführt.

Es ist angenommen, daß drei Steckplätze mit Funktionseinheiten bestückt sind, die jeweils in der Lage sind, die DMA-Anforderungsleitungen DRa, DRb und DRm mit einem DMA-Anforderungssignal in Form eines 1-Pegels zu aktivieren. Während eines Parametrierlaufs des Rechners erzeugt ein Parametrierprogramm nach den Vorgaben eines Anwenders für jeden Steckplatz und somit für jedes Einstellmittel Ea, Eb ... Em eine Kennung, die anzeigt, welche der DMA-Anforderungsleitungen DRa, DRb ... DRm für die jeweilige Funktionseinheit im Falle eines DMA-Ereignisses zu aktivieren ist. Ferner hinterlegt das Parametrierprogramm diese Kennungen in den Steckplätzen zugeordneten Registern. Für den Fall, daß für die Einstellmittel Ea, Eb ... Em die Kennungen für die DMA-Anforderungsleitungen DRm, DRa und DRb hinterlegt sind, steuert ein Einstellprogramm, das Teil des Parametrierprogramms sein kann, die Einstellmittel Ea, Eb ... Em über jeweilige Steuereingänge 6, 7, 8 dieser Einstellmittel Ea, Eb ... Em, derart, daß das Einstellmittel Ea die DMA-Anforderungsleitung DRa mit der Ausgangsleitung DRQm, das Einstellmittel Eb die DMA-Anforderungsleitung DRb mit der Ausgangsleitung DRQa und das Einstellmittel Em die DMA-Anforderungsleitung DRm mit der Ausgangsleitung DRQb verbindet. Dazu liest das Einstellprogramm zunächst die Register aus, erzeugt geeignete Steuersignale, die den Steuereingängen 6, 7, 8 der Einstellmittel Ea, Eb ... Em zugeführt sind und diesen anzeigen, welche Ausgangsleitung DRQa, DRQb ... DRQm mit der jeweiligen DMA-Anforderungsleitung DRa, DRb ... DRm an den jeweiligen Eingängen der Einstellmittel Ea, Eb ... Em kurzzuschließen ist.

In der beschriebenen Art und Weise kann auch die Auswahl von DMA-Quittungsleitungen vereinfacht werden, über welche der DMA-Controller DMA-Quittungssignale den Funktionseinheiten zuführt und über welche der DMA-Controller diesen Einheiten anzeigt, daß ein DMA-Zugriff beendet ist. Dazu sind weitere Einstellmittel Fa, Fb ... Fm vorgesehen, an deren Eingänge jeweils eine der DMA-Quittungsleitungen 2b angeschlossen ist. Im vorliegenden Beispiel ist die DMA-Quittungsleitung DAa an den Eingang des Einstellmittels Fa, die DMA-Quittungsleitung DAb an den Eingang des Einstellmittels Fb und die DMA-Quittungsleitung DAm an den Eingang des Einstellmittels Fm angeschlossen. Das Parametrier- und Einstellprogramm steuert die Einstellmittel Fa, Fb ... Fm über Steuereingänge 9, 10, 11 dieser Einstellmittel Fa, Fb ... Fm nach den Vorgaben des Anwenders, derart, daß das Einstellmittel Fa die DMA-Quittungsleitung DAa mit einer Ausgangsleitung DACKm, das Einstellmittel Fb die DMA-Quittungsleitung DAb mit einer Ausgangsleitung DACKa und das Einstellmittel Fm die DMA-Quittungsleitung DAm mit einer Ausgangsleitung DACKb verbindet. Dazu liest wiederum das Einstellprogramm zunächst die in den Registern hinterlegten Kennungen aus, erzeugt geeignete Steuersignale, die den Steuereingängen 9, 10, 11 der Einstellmittel Fa, Fb ... Fm zugeführt sind und diesen anzeigen, welche Ausgangsleitung DACKa, DACKb ... DACKm mit der jeweiligen DMA-Quittungsleitung DAa, DAb ... DAm an den jeweiligen Eingängen der Einstellmittel Fa, Fb ... Fm kurzzuschließen ist.

## Patentansprüche

1. Rechner mit
- Steckplätzen, die untereinander mit Adreß-, Daten- und Steuerleitungen verbunden sind, wobei die Steuerleitungen DMA-Anforderungsleitungen (DRa, DRb ... DRm) umfassen,
- einem DMA-Controller, dem über die DMA-Anforderungsleitungen (DRa, DRb ... DRm) und über Einstellmittel (Ea, Eb ... Em) DMA-Anforderungssignale durch steckbare Funktionseinheiten zuführbar sind,
**dadurch gekennzeichnet, daß**
- die Steckplätze mit jeweils einem Einstellmittel versehen sind,
- die Einstellmittel mit einem DMA-Eingang und mit mehreren Ausgängen versehen sind,
- jeweils eine DMA-Anforderungsleitung (DRa, DRb ... DRm) an den DMA-Eingang eines Einstellmittels (Ea, Eb ... Em) angeschlossen ist,
- der DMA-Controller über Ausgangsleitungen (DRQa, DRQb ... DRQm) an die Ausgänge der Einstellmittel (Ea, Eb ... Em) angeschlossen ist und
- die Einstellmittel (Ea, Eb ... Em) derart über Steuersignale einstellbar sind, daß ihre jeweiligen DMA-Eingänge mit einem ihrer Ausgänge verbindbar sind.

2. Rechner nach Anspruch 1, wobei den Funktionseinheiten über DMA-Quittungsleitungen (DAa, DAb ... DAm) und weiteren Einstellmitteln (Fa, Fb ... Fm) DMA-Quittungssignale durch den DMA-Controller zuführbar sind, **dadurch gekennzeichnet, daß**
- die Einstellmittel (Fa, Fb ... Fm) mit einem Quittungseingang und mit mehreren Ausgängen versehen sind,
- jeweils eine DMA-Quittungsleitung (DAa, DAb ... DAm) an den Quittungseingang eines Einstellmittels (Fa, Fb ... Fm) angeschlossen ist,
- der DMA-Controller über Leitungen (DACKa, DACKb ... DACKm) an die Ausgänge der Einstellmittel (Fa, Fb ... Fm) angeschlossen ist und
- die Einstellmittel (Fa, Fb ... Fm) derart über Steuersignale einstellbar sind, daß ihre jeweiligen Quittungseingänge mit einem ihrer Ausgänge verbindbar sind.

3. Rechner nach Anspruch 1 oder 2, **dadurch gekennzeichnet, daß** die Einstellungen parametrierbar sind.

4. Rechner nach einem der Ansprüche 1 bis 3, **dadurch gekennzeichnet, daß** die Einstellmittel (Ea, Eb ... Em) jeweils einen Multiplexer aufweisen.

## Claims

1. Computer with
- slots, which are connected to one another with address, data and control lines, the control lines including DMA request lines (DRa, DRb ... DRm),
- a DMA controller, to which DMA request signals can be applied by plug-in functional units over the DMA request lines (DRa, DRb ... DRm) and over setting means (Ea, Eb ... Em),
**characterised in that**
- each of the slots is equipped with a setting means,
- the setting means are equipped with a DMA input and with several outputs,
- in each case a DMA request line (DRa, DRb ... DRm) is connected to the DMA input of a setting means (Ea, Eb ... Em) ,
- the DMA controller is connected over output lines (DRQa, DRQb ... RQm) to the outputs of the setting means (Ea, Eb ... Em) and
- the setting means (Ea, Eb ... Em) can be set by control signals in such a way that their respective DMA inputs can be connected to one of their outputs.

2. Computer according to Claim 1, in which DMA acknowledge signals can be applied by the DMA controller to the functional units over DMA acknowledge lines (DAa, DAb ... DAm) and further setting means (Fa, Fb ... Fm),
**characterised in that**
- the setting means (Fa, Fb ... Fm) are equipped with an acknowledge input and with several outputs,
- in each case a DMA acknowledge line (DAa, DAb ... DAm) is connected to the acknowledge input of a setting means (Fa, Fb ... Fm),
- the DMA controller is connected over lines (DACKa, DACKb ... DACKm) to the outputs of the setting means (Fa, Fb ... Fm) and
- the setting means (Fa, Fb ... Fm) can be set by control signals in such a way that their respective acknowledge inputs can be connected to one of their outputs.

3. Computer according to Claims 1 and 2, **characterised in that** the settings can be parameterised.

4. Computer according to one of Claims 1 to 3,
**characterised in that** the setting means (Ea, Eb ... Em) each have a multiplexer.

## Revendications

1. Ordinateur comportant
- des connecteurs qui sont reliés entre eux avec des lignes d'adresses, de données et de commande, les lignes de commande comprenant des lignes de demande de DMA (DRa, DRb à DRm),
- un contrôleur de DMA auquel des signaux de demande de DMA peuvent être envoyés par des unités fonctionnelles embrochables par l'intermédiaire des lignes de demande de DMA (DRa, DRb à DRm) et par l'intermédiaire de moyens de réglage (Ea, Eb à Em),
**caractérisé par le fait que**
- les connecteurs sont munis chacun d'un moyen de réglage,
- les moyens de réglage sont munis d'une entrée DMA et de plusieurs sorties,
- à chaque fois, une ligne de demande de DMA (DRa, DRb à DRm) est raccordée à l'entrée DMA d'un moyen de réglage (Ea, Eb à Em),
- le contrôleur de DMA est raccordé par l'intermédiaire de lignes de sortie (DRQa, DRQb à DRQm) aux sorties des moyens de réglage (Ea, Eb à Em), et
- les moyens de réglage (Ea, Eb à Em) sont réglables par l'intermédiaire de signaux de commande de telle sorte que leurs entrées DMA respectives peuvent être reliées à l'une de leurs sorties.

2. Ordinateur selon la revendication 1, des signaux d'accusé de réception de DMA pouvant être envoyés par le contrôleur de DMA aux unités fonctionnelles par l'intermédiaire de lignes d'accusé de réception de DMA (DAa, DAb à DAm) et par l'intermédiaire d'autres moyens de réglage (Fa, Fb à Fm), **caractérisé par le fait que**
- les moyens de réglage (Fa, Fb à Fm) sont munis d'une entrée d'accusé de réception et de plusieurs sorties,
- à chaque fois, une ligne d'accusé de réception de DMA (DAa, DAb à DAm) est raccordée à l'entrée d'accusé de réception d'un moyen de réglage (Fa, Fb à Fm),
- le contrôleur de DMA est raccordé par l'intermédiaire de lignes (DACKa, DACKb à DACKm) aux sorties des moyens de réglage (Fa, Fb à Fm), et
- les moyens de réglage (Fa, Fb à Fm) sont réglables par l'intermédiaire de signaux de commande de telle sorte que leurs entrées d'accusé de réception respectives peuvent être reliées à l'une de leurs sorties.

3. Ordinateur selon la revendication 1 ou 2, **caractérisé par le fait que** les réglages sont paramétrables.

4. Ordinateur selon l'une des revendications 1 à 3, **caractérisé par le fait que** les moyens de réglage (Ea, Eb à Em) comportent chacun un multiplexeur.
